# EUROPÄISCHE PATENTSCHRIFT

(11) **EP 1 051 309 B1**
(45) Veröffentlichungstag und Bekanntmachung des Hinweises auf die Patenterteilung: **04.05.2005**
(21) Anmeldenummer: 98954111.5
(22) Anmeldetag: 10.08.1998
(51) Int. Cl.: B60L 11/12, F28D 20/02, F28D 20/00, B60L 11/18, B60K 8/00

(54) **GEGENSTAND UND VERFAHREN ZUR ENERGIESPEICHERUNG IN FORM THERMISCHER ENERGIE MITTELS HOCHTEMPERATUR-AKKUMULATOREN**
DEVICE AND METHOD FOR HIGH-TEMPERATURE ACCUMULATORS FOR STATIONARY ENERGY STORAGE AND FOR ACTUATING NONSYSTEM-CONNECTED LAND, WATER AND AIR VEHICLES
APPAREIL ET PROCEDE DESTINE A DES BATTERIES HAUTE TEMPERATURE EN VUE DE L'ACCUMULATION STATIONNAIRE D'ENERGIE ET DE L'ACTIONNEMENT INDEPENDANT DU RESEAU SECTEUR DE VEHICULES ROUTIERS, DE BATEAUX, D'AERONEFS ET DE SPATIONEFS

(30) Priorität: 11.08.1997 DE 19734733
(43) Veröffentlichungstag der Anmeldung: 15.11.2000
(73) Patentinhaber: Deutsches Zentrum für Luft- und Raumfahrt e.V., 53175 Bonn (DE)
(72) Erfinder: FOPPE, Werner, D-52511 Geilenkirchen (DE)
(74) Vertreter: COHAUSZ DAWIDOWICZ HANNIG & PARTNER
(86) Internationale Anmeldenummer: PCT/DE1998/002293
(87) Internationale Veröffentlichungsnummer: WO 1999/007804

(56) Entgegenhaltungen:
- EP-A- 0 665 413
- EP-A- 0 770 511
- WO-A-95/25416
- DE-A- 4 427 322
- DE-A- 4 445 160
- US-A- 4 512 388

## Beschreibung

Die Erfindung betrifft einen Hochtemperatur-Akkumulator, in dem schnell aufladbar Hochtemperatur- Wärmeenergie gespeichert ist, die direkt über einen Thermionischen Generator in elektrische Antriebsenergie oder über einen Stirlingmotor direkt in Druckenergie zum Antrieb von Hydromotoren umgesetzt werden kann. Die Erfindung betrifft weiterhin ein Verfahren zum Betrieb des Akkumulators.

Bekannt sind Hochtemperatur-Akkumulatoren, die auf elektrochemischer Basis arbeiten, wie das gegenwärtig leistungstärkste Natrium/Schwefel Hochtemperatursystem von ABB mit 0,08 - 0,1 kWh/kg und das Hochtemperatursystem Natrium/Nickelchlorid von AEG Anglo Batteries, Produktnamen 'Zebra-Batterie', mit 0,08 kWh/kg.

Diese sogenannten Hochtemperatursysteme benötigen Betriebstemperaturen um 300°C, bei der die eingesetzten Oxidkeramik-Elektrolyten für lonen durchlässig werden und die Strom liefernde Elektrodenreaktion ablaufen kann. Zur Aufrechterhaltung der Betriebstemperatur ist ständiges Beheizen notwendig, sonst wird der Akkumulator funktionsuntüchtig und entleert sich innerhalb weniger Tage.

Neben der Unfallgefahr sind die hohen Kosten, das hohe Gewicht, die geringe Reichweite und die hohe Aufladezeit, die negativen Faktoren, gegenüber denen der Verbrennungsmotor konkurrenzlos ist. Die produktionsreife 'Zebra-Batterie' würde bei großen Stückzahlen immer noch 500 DM/kWh kosten und bei Fahrleistungen wie ein 'Benziner', mit 50 kWh Speicherkapazität ein Eigengewicht von 600 kg haben und Akkumulatorkosten von 25.000 Mark verursachen.

Ein ernsthaftes Problem sind die reaktiven und aggressiven Schmelzen, die im Falle eines schweren Unfalls sich in Verbindung mit Wasser und Luft entzünden. Flüssignatrium reagiert in Verbindung mit Wasser explosionsartig. Die alkalische Schwefelschmelze ist hochkorrosiv gegenüber Stahl und zerstört bereits bei einem Haarriß das Batteriegehäuse und entzündet sich an der Luft. In Verbindung mit Wasser entsteht hochgiftiger Schwefel-wasserstoff. Aus diesen Gründen hat ABB die Arbeiten an der Natrium/Schwefel-Batterie eingestellt.

Im Gegensatz zu diesen elektrochemisch arbeitenden Hochtemperatur-Akkumulatoren, die im Vergleich zu dem erfindungsgemäßen Verfahren zu Niedertemperatur-Akkumulatoren werden, arbeitet das erfindungsgemäße Hochtemperatur-Akkumulatorsystem mit mehrfach höheren Temperaturen, die je nach eingesetztem Akkumulatormaterial, um den Faktor 10 höher liegen können.

Eine Vorrichtung zur Speicherung und Rückgewinnung von Hochtemperatur-Wärmeenergie ist z.B. aus der WO-A-95/25416 bekannt. Bei dieser bekannten Vorrichtung werden Graphitblöcke als thermisches Speichermaterial eingesetzt und mittels Solarenergie, induktiver Stromheizung oder anderer Methoden auf Temperaturen über 2000°C aufgeheizt.

Zur thermischen Isolierung befinden sich die Graphitblöcke in evakuierten Gefäßen, die typischerweise aus Stahl bestehen und zur zusätzlichen Vermeidung von thermischen Strahlungsverlusten polierte Innenwände oder eine Schicht zur Reflektion der von den aufgeheizten Graphitblöcken ausgesandten IR-Strahlung aufweisen. Um einen thermischen Kontakt zwischen den Graphitblöcken und der Gehäusewandung zu vermeiden, sind zwischen der Gehäusewandung und den Blöcken isolierende Abstandshalter aus Keramik angeordnet.

Die in den Graphitblöcken gespeicherte Wärmeenergie wird durch Ankopplung der Blöcke z.B. an eine Expansionsmaschine, was über Fluidleitungen erfolgt, wieder nutzbar gemacht.

Aufgabe des erfindungsgemäßen Hochtemperatur-Akkumulators bzw. des Verfahrens ist es, netzunabhängige Fahrzeuge aller Art, ob Land-, Wasser-, Luft- oder Raumfahrzeuge, genauso wie oder komfortabler als durch Verbrennungsmotoren anzutreiben, ohne deren Nachteile wie Schadstoffausstoß, hohen Lärmpegel und hohen Wartungsbedarf zu haben. Weitere Aufgabe ist die sofortige Verfügbarkeit netzunabhängiger, stationärer Energiespeicher.

Diese Aufgabe wird gelöst durch einen Hochtemperatur-Akkumulators mit den Merkmalen des Anspruches 1 sowie durch ein Verfahren zur Speicherung und Rückgewinnung von Energie bei diesem Akkumulator mit den Merkmalen des Anspruchs 19.

In diesem Akkumulator wird brennstofffrei eine möglichst große Wärmemenge pro Gewichts- oder Raumeinheit gespeichert, über eine möglichst lange Zeit konserviert und bei Bedarf wieder mit möglichst großen Wirkungsgrad als Antriebsenergie abgegeben.

Basismaterial zur Lösung dieser Aufgabe ist Graphit, der als Träger- Speicher-, Druckverstärker- und Hochtemperatur-Isoliermaterial dient, aber gleichzeitig auch zur Wärme- und Stromleitung und als Widerstandsheizung genutzt wird.

Carbon ist der Stoff mit der höchsten Temperaturbeständigkeit von über 3500°C in fester Phase, wird von Metallschmelze nicht benetzt und ist deshalb als Träger- und Aufheizmaterial, aber auch als Wärmespeichermaterial selbst, optimal für Hochtemperatur-Akkumulatoren einsetzbar. Carbon läßt sich nach Bedarf formen und bearbeiten. Carbon ist ein Hochleistungsprodukt dessen geforderte Eigenschaften wie Wärmeleitfähigkeit, elektische Leitfähigkeit, Dichte, Druck- und Zugfestigkeit maßgerecht im Produktionsprozeß erzielt werden können. Die Produktpalette von Carbon reicht von großen Blöcken über Fasern zu Verbundwerkstoffen, Folien und Isolierfilzen. Aus diesem Produktangebot allein läßt sich ein Carbon-Akkumulator mit einer maximalen Kapazität von 25 kWh/l erstellen.

Das erfindungsgemäße Verfahren nutzt außer Graphit als Speichermaterial in dieser Hinsicht noch leistungsfähigere andere Elemente oder Verbindungen von Elementen mit hoher Schmelz- und Verdampfungsenthalpie und nutzt die Tatsache, daß zwischen Schmelzpunkt und Verdampfungspunkt eine etwa 4fach höhere Energiemenge aufgenommen und gespeichert wird, als für die Aufheizung des Materials bis zum Schmelzpunkt nötig ist. Bei Verdampfung des Speichermaterials wird sogar eine 10fach höhere Energiemenge aufgenommen, wobei damit im Hochtemperatur-Akkumulator-Hochdruckverfahren eine optimale Energiemenge pro kWh/kg speicherbar wird, deren Optimum bei 20 kWh/kg oder 50 kWh/l liegt.

Vorteilhaft sind nicht toxische Hochtemperatur-Speichermaterialien, die sublimieren und direkt von der festen in die gasförmige Phase übergehen. Damit ist im Falle eines Unfalls keine Schmelze vorhanden, die auslaufen, Brände verursachen und toxische Reaktionen auslösen könnte. Von Bedeutung sind auch Wärmeleitfähigkeit und der elektrische-Widerstand, die einen schnellen Übergang von Strom in Hochtemperaturwärme gewährleisten.

Bedingt durch die Eigenschaften des eingesetzten Hochtemperatur-Speichermaterials und die zum Einsatz kommende Temperaturhöhe, sind die erfindungsgemäßen Hochtemperatur-Akkumulatoren in Hoch- und Niederdruck-Aggregate zu unterscheiden, wobei die Aggregatzustände des Speichermaterials fest, flüssig, gasförmig, fest-flüssig, flüssig-gasförmig, fest-gasförmig sein können.

Mit Speicherung der Hochtemperaturwärme wird der Umstand genutzt, daß der Wirkungsgrad eines Thermionischen-Generators oder eines Stirlingmotors mit wachsender Temperaturdifferenz zwischen Kühl- und Heizbereich zu nimmt. Auf diese Weise wird der Energieverlust beim Übergang von gespeicherter Wärmeenergie in Antriebsenergie klein gehalten. Gegenüber einem Verbrennungsmotor, der den Treibstoff nur mit einem Wirkungsgrad von 15% nutzt, arbeiten Thermoelektrischer-Generator und Stirlingmotor unter Hochtemperaturwärme und Kühlung durch Umgebungstemperatur mit einem Wirkungsgrad von über 50 %.

Der Gesamtwirkungsgrad und die Kosten/Nutzenbilanz gegenüber Transportmittel mit Verbrennungsmotoren erhöht sich noch erheblich durch den direkten Antrieb über Strom- bzw. Hydromotoren, da die alte kosten- und gewichtsintensive Mechanik herkömmlicher Fahrzeuge, wie Verbrennungsmotor, Auspuffanlage, Getriebe, Kardanwelle, Anlasser, Startbatterie, Bremsanlage, Treibstoffpumpe, Tank sowie deren Wartung und Ersatz entfällt. Motoröl, Getriebeöl, Bremsflüssigkeit und Kühlflüssigkeit werden überflüssig.

Das Speichermaterial des erfindungsgemäßen Hochtemperatur-Akkumulators besteht außer Graphit vorzüglich aus den Elementen Beryllium, Bor, Lithium, Silizium und ihrer Boride, Carbide und Nitride, von denen die meisten vorteilhaft ohne Flüssigphase sublimieren.

Unter Nutzung der Flüssigphase eignen sich auch Metalle als Hochtemperatur-Speicher-materialien, wie beispielsweise Kupfer oder Vanadium im Temperaturbereich bis 3500°C Die Energiedichten der aufgeführten Hochtemperatur-Speichermaterialien liegen zwischen 10 - 50 kWh/l, die damit um den Faktor 100 höher liegen als die der leistungfähigsten, elektrochemisch arbeitenden Hochtemperatur-Akkumulatoren. Volumenbezogen liegt z.B. die Speicherkapazität von Be₂C und B₄C bei Sublimationstemperaturen von etwa 2500°C bei 35 kWh/liter.

Die für die Aufheizung des Speichermaterials durch elektrischen Strom aufzuwendende Energie steht beim Übergang vom flüssigen Zustand in den festen oder von dem gasförmigen in den festen Aggregatzustand wieder voll zur Verfügung und kann über Generatoren in Antriebsenergie umgesetzt werden.

Vorteilhaft ist die Aufladung durch Strom, in Form von Hochtemperaturwärme bei direktem Stromdurchfluß des Speichermaterials, mittels Wiederstandaufheizung intern. Bei externer Aufheizung des Speichermaterials, die auch eine induktive Aufheizung zu ließe, wäre eine Entnahme oder Auswechselung des Speichermaterials durch einen Automaten notwendig.

Die technische Beherrschbarkeit der hohen Temperaturen bei einer hohen Speicherdauer wird durch eine Superisolierung gewährleistet, die erfindungsgemäß dadurch gelöst wird, daß das aufzuheizende Speichermaterial unter Schutzgas (Stickstoff, Argon) bspw. in einem druckfesten und gasdichten, hohlen Graphitzylinder(Graphithohlkörper) eingebracht und durch Stromdurchfluß direkt aufgeheizt wird, und/oder indirekt über die Wärme-strahlung des bei Stromdurchfluß aufgeheizten Graphitzylinders. Der Graphitzylinder hat beim Hochdruckverfahren dem erhöhten Gasdruck des sublimierten Speichermaterials stand zu halten. Um dies zu gewährleisten, sind entweder Speichermaterialien mit geringen Gasdrücken im Sublimationspunkt zu wählen, oder der Graphitzylinder ist mit Kohlefasergewebe druckfest zu verstärken.

Zur optimalen Wärmeisolierung wird der Graphithohlkörper(Träger des Hochtemperatur-speichermaterials) abwechseln durch gasdicht gemachte Graphithartfilzschichten mit geringer Wärmeleitfähigkeit und Schutzgasschichtem isoliert, wobei die inneren Graphitflächen mit Strahlungsreflektoren versehen sind.

Eine 40 mm starke SIGRATHERM Hartfilzschicht dämmt unter Schutzgas bei einer Wärmequelle von 2000°C eine Wärmestrahlung von 10 kW/m² auf 400°C herunter. Die Wärmeleitfähigkeit der Hartfilzschicht beträgt bei 2000°C etwa 1 W/K m und fällt bei 400°C auf 0.2 W/K m. Ab dieser Temperatur kann bereits kostengünstiger Steinwollefilz mit einer um den Faktor 10 niedrigeren Wärmeleitfähikeit zur Isolierung eingesetzt werden. Nach Isolierung bis auf Umgebungstemperatur wird der Hochtemperatur-Akkumulator mit einem stabilen, gasdichten Mantel versehen, der mit Einrichtungen zur automatisierten Energieaufnahme und Energieabgabe versehen ist.

Um einen Heizzylinder von 250 mm Durchmesser bei einer Temperatur von 2500°C auf Zimmertemperatur zu isolieren, ist lediglich eine Isolierschichtfolge nach vorgenanntem Aufbau von ebenfalls nur 250 mm Stärke notwendig. Damit wird deutlich, welch hohe Energieleistung auf kleinem Raum ein Hochtemperatur-Akkumulator aufnehmen kann.

Ein Ausführungsbeispiel eines erfindungsgemäßen Niederdruck-Hochtemperatur-Akkumulators aus BN (Bornitrid), das als Speichermaterial bei 2400°C sublimiert und eine mittlere Wärmespeicherkapazität besitzt, soll dies verdeutlichen.

Ein Zylinder aus Carbon mit den Abmessungen 30 x 30 cm und einem Rauminhalt von etwa 20 l speichert bei 3000°C eine Energiemenge von etwa 100 kWh. Rechnen wir für die Wärmeisolierung ebenfalls eine Schichtdicke von rundum 30 cm, so hat der Carbon-Hochtemperatur-Akkumulator inklusiv gasdichtem Außenmantel nur eine Gesamtabmessung von etwa 100 x 100 cm bei 100 kg Gesamtgewicht.

Ein Hochtemperatur-Akkumulator dieser Abmessung plus Generator hat im Sero-Emission-Car bequem dort Platz, wo sonst der überflüssig gewordene Verbrennungs-motor mit Antriebsaggregat saß oder in flacherer Form in der Bodenplatte. Das Null-Emission-Auto benötigt nur noch eine elektronische Steuerung, vier Radantriebsmotoren die beim Bremsen als Generator wirken und die Bremsenergie in Form von Wärmeenergie in den Akkumulator wieder einspeisen, oder im Falle von Hydromotoren den Druckspeicher aufladen.

Bei einem Wirkungsgrad von 40 - 50% und 100 kWh Speicherleistung fährt ein Null-Emission-Auto mit einem Hochtemperatur-Akkumulator 500 - 600 km bei einer Auflad-zeit von 5 Minuten. Bei Stromkosten, wie beim gegenwärtig teueren Haushaltsstrom von 0.25 DM/kWh, würden 500 km mit dem Hochtemperatur-Akkumulator nur 25 DM kosten, fünfmal weniger als die Treibstoffkosten eines heutigen Mittelklassewagens. Mit vorgenannter Superisolierung ist eine Standzeit von 5 Monaten zu erwarten, bis sich der Hochtemperatur-Akkumulator durch Wärmeverlust erschöpft. Die Lebensdauer eines optimierten erfindungsgemäßen Hochtemperatur-Akkumulators mit den Leistungsdaten:
100 kWh/10 l bei einem Gesamtgewicht von 100 kg, ist gleich der Lebensdauer des Fahrzeugs.

Die Aufgabe der erfindungsgemäßen Hochtemperatur-Akkumulatoren, Brennstoffmotoren für Land-, Luft- und Wasserfahrzeuge zu ersetzen und vor Ort emissionsfreie Transport-mittel in allen Bereichen des Transportsektors zum Durchbruch zu verhelfen, ist mit den gegebenen Leitungsmerkmalen für Hochtemperatur-Akkumulatoren gesichert.

### Leistungsprofil eines mittleren Hochtempeartur-Akkumulators:

Leistung/Gewicht = 100 kWh/100 kg
Leistung/Kosten = 1 kWh/50,--DM
H-T-Akkukosten = 5.000,--DM
Reichweite = 500 km
Lebensdauer = 25 Jahre
Ladezeit = 5 Minuten
Stromkosten/km = 5 Pfennig/km
Stromkosten = 5 Mark/100 km

## Patentansprüche

1. Hochtemperatur-Akkumulator zur Speicherung von Hochtemperatur-Wärmeenergie, **dadurch gekennzeichnet, daß** ein aufheizbares Hochtemperatur-Speichermaterial in einen Graphithohlkörper eingebracht ist.

2. Akkumulator nach Anspruch 1, **dadurch gekennzeichnet, daß** das Speichermaterial aus einem der Materialien Graphit, Beryllium, Bor, Lithium, Silizium oder deren Borid, Carbid und Nitrid besteht.

3. Akkumulator nach einem der vorherigen Ansprüche, **dadurch gekennzeichnet, daß** das Speichermaterial aus einem Metall, beispielsweise Kupfer oder Vanadium besteht.

4. Akkumulator nach einem der vorherigen Ansprüche, **dadurch gekennzeichnet, daß** das Speichermaterial im Graphithohlkörper in den Aggregatzuständen fest, flüssig, gasförmig, fest-flüssig, flüssig-gasförmig oder fest-gasförmig vorliegt.

5. Akkumulator nach einem der vorherigen Ansprüche, **dadurch gekennzeichnet, daß** das Speichermaterial unter Schutzgas steht.

6. Akkumulator nach einem der vorherigen Ansprüche, **dadurch gekennzeichnet, daß** das Speichermaterial direkt mittels Stromdurchfluß und/oder indirekt durch den mittels Stromdurchfluß aufgeheizten Graphithohlkörper aufheizbar ist.

7. Akkumulator nach einem der vorherigen Ansprüche, **dadurch gekennzeichnet, daß** das Speichermaterial bei Aufheizung aus der festen Phase ohne Flüssigphase sublimiert.

8. Akkumulator nach einem der vorherigen Ansprüche, **dadurch gekennzeichnet, daß** das Speichermaterial eine hohe Verdampfungsenthalpie aufweist.

9. Akkumulator nach einem der vorherigen Ansprüche, **dadurch gekennzeichnet, daß** der Graphithohlkörper druckfest und gasdicht ist.

10. Akkumulator nach einem der vorherigen Ansprüche, **dadurch gekennzeichnet, daß** der Graphithohlkörper mittels Kohlefasergewebe druckfest verstärkt ist.

11. Akkumulator nach einem der vorherigen Ansprüche, **dadurch gekennzeichnet, daß** der Graphithohlkörper abwechselnd durch gasdichte Graphithartfilzschichten mit geringer Wärmeleitfähigkeit und Schutzgasschichten isoliert ist, wobei die inneren Graphitflächen mit Strahlungsreflektoren versehen sind.

12. Akkumulator nach einem der vorherigen Ansprüche, **dadurch gekennzeichnet, daß** der Akkumulator mit einem stabilen, gasdichten Mantel versehen ist, der Einrichtungen zur automatisierten Energieaufnahme und Energieabgabe aufweist.

13. Akkumulator nach einem der vorherigen Ansprüche, **dadurch gekennzeichnet, daß** in ihm Energien von 10-50 kWh pro Liter Speichermedium speicherbar sind.

14. Akkumulator nach einem der vorherigen Ansprüche, **dadurch gekennzeichnet, daß** Speicher- Stromleiter-, Druckverstärker-, Stromisolations- und Wärmeisolationsmaterial aus Graphit bestehen.

15. Akkumulator nach einem der vorherigen Ansprüche **dadurch gekennzeichnet, daß** die Wärmeenergie mittels eines Generators aus dem Akkumulator rückgewinnbar ist.

16. Akkumulator nach einem der vorherigen Ansprüche, **dadurch gekennzeichnet, daß** der Generator ein thermionischer Generator oder ein Sterling-Motor ist.

17. Verwendung eines Akkumulators nach einem der vorherigen Ansprüche als Energiequelle zum Antrieb von Land-, Wasser-, Luft- und Raumfahrtzeugen.

18. Verwendung eines Akkumulators nach einem der vorherigen Ansprüche als stationäres Strom- und Wärmeaggregat.

19. Verfahren zur Speicherung und Rückgewinnung von Energie bei einem Hochtemperatur-Akkumulator nach einer der vorherigen Ansprüche, **dadurch gekennzeichnet, daß** Wärmeenergie durch Aufheizung des Speichermaterials gespeichert und mittels eines Generators zurückgewonnen wird.

20. Verfahren nach Anspruch 19, **dadurch gekennzeichnet, daß** das Speichermaterial im Akkumulator durch direkten Stromdurchfluß und/oder über den stromgeheizten Graphithohlkörper geheizt wird.

21. Verfahren nach einem der vorherigen Ansprüche 19 oder 20, **dadurch gekennzeichnet, daß** das Speichermaterial nach Entnahme aus dem Akkumulator induktiv geheizt wird.

22. Verfahren nach einem der vorherigen Ansprüche 19 bis 21, **dadurch gekennzeichnet, daß** im Niederdruckbetrieb des Akkumulators das Speichermaterial bis zum Verdampfungspunkt geheizt wird.

23. Verfahren nach einem der vorherigen Ansprüche 19 bis 22, **dadurch gekennzeichnet, daß** im Hochdruckbetrieb des Akkumulators das Speichermaterial bis über den Verdampfungspunkt geheizt wird.

## Claims

1. High-temperature accumulator for high-temperature heat energy storage, **characterised in that** a heatable high-temperature storage material is contained in a hollow graphite body.

2. Accumulator according to claim 1, **characterised in that** the storage material consists of the materials graphite, beryllium, boron, lithium, silicon or their boride, carbide and nitride.

3. Accumulator according to one of the foregoing claims, **characterised in that** the storage material consists of a metal, for example copper or vanadium.

4. Accumulator according to one of the foregoing claims, **characterised in that** the storage material in the hollow graphite body is present in the solid, liquid, gaseous, solid-liquid, liquid-gaseous or solid-gaseous states of aggregation.

5. Accumulator according to one of the foregoing claims, **characterised in that** the storage material is under inert gas.

6. Accumulator according to one of the foregoing claims, **characterised in that** the storage material may be heated directly by current conduction and/or indirectly through the hollow graphite body heated by current conduction.

7. Accumulator according to one of the foregoing claims, **characterised in that** when heated the storage material sublimates from the solid phase without a liquid phase.

8. Accumulator according to one of the foregoing claims, **characterised in that** the storage material has a high evaporation enthalpy.

9. Accumulator according to one of the foregoing claims, **characterised in that** the hollow graphite body is pressure-resistant and gas-proof.

10. Accumulator according to one of the foregoing claims, **characterised in that** the hollow graphite body is pressure resistant reinforced by means of carbon fibre reinforced fabric.

11. Accumulator according to one of the foregoing claims, **characterised in that** the hollow graphite body is insulated alternately by gas-proof rigid graphite felt layers with low heat conductivity and inert gas layers, the inner graphite surfaces having radiant reflectors.

12. Accumulator according to one of the foregoing claims, **characterised in that** the accumulator is provided with a stable, gas-proof jacket which has devices for automated energy absorption and energy output.

13. Accumulator according to one of the foregoing claims, **characterised in that** energy of 10-50 kWh per litre of storage medium may be stored in it.

14. Accumulator according to one of the foregoing claims, **characterised in that** the storage, conductor, pressure reinforcement, current insulation and thermal insulation material consists of graphite.

15. Accumulator according to one of the foregoing claims, **characterised in that** the heat energy is recoverable from the accumulator by means of a generator.

16. Accumulator according to one of the foregoing claims, **characterised in that** the generator is a thermionic generator or a Sterling motor.

17. Use of an accumulator according to one of the foregoing claims as an energy source for actuating land, water, air and space vehicles.

18. Use of an accumulator according to one of the foregoing claims as a stationary power and heat unit.

19. Method for storage and recovery of energy in a high-temperature accumulator according to one of the foregoing claims, **characterised in that** heat energy is stored by heating the storage material and is reclaimed by means of a generator.

20. Method according to claim 19, **characterised in that** the storage material in the accumulator is heated by direct current conduction and/or through the current-heated hollow graphite body.

21. Method according to one of the foregoing claims 19 or 20, **characterised in that** the storage material is heated inductively after removal from the accumulator.

22. Method according to one of the foregoing claims 19 to 21, **characterised in that** in low-pressure operation of the accumulator the storage material is heated up to the evaporation point.

23. Method according to one of the foregoing claims 19 to 22, **characterised in that** in high-pressure operation of the accumulator the storage material is heated to above the evaporation point.

## Revendications

1. Accumulateur à haute température pour le stockage de l'énergie thermique à haute température, **caractérisé en ce qu'**un matériau de stockage à haute température, pouvant être chauffé, est incorporé dans un corps creux en graphite.

2. Accumulateur selon la revendication 1, **caractérisé en ce que** le matériau de stockage est constitué de l'un des matériaux : graphite, béryllium, bore, lithium, silicium ou leurs borures, carbures et nitrures.

3. Accumulateur selon l'une des revendications précédentes, **caractérisé en ce que** le matériau de stockage se compose d'un métal, par exemple le cuivre ou le vanadium.

4. Accumulateur selon l'une des revendications précédentes, **caractérisé en ce que** le matériau de stockage se présente aux états agrégés sous forme solide, liquide, gazeuse, solide - liquide, liquide - gazeuse ou solide - gazeuse.

5. Accumulateur selon l'une des revendications précédentes, **caractérisé en ce que** le matériau de stockage est placé sous gaz protecteur.

6. Accumulateur selon l'une des revendications précédentes, **caractérisé en ce que** le matériau de stockage peut être chauffé directement par flux circulant et/ou indirectement par le biais d'un corps creux en graphite chauffé par un flux circulant.

7. Accumulateur selon l'une des revendications précédentes, **caractérisé en ce que** le matériau de stockage est sublimé lors du chauffage à partir de la phase solide, sans phase liquide.

8. Accumulateur selon l'une des revendications précédentes, **caractérisé en ce que** le matériau de stockage présente une enthalpie de vaporisation élevée.

9. Accumulateur selon l'une des revendications précédentes, **caractérisé en ce que** le corps creux en graphite résiste à la pression et est étanche aux gaz.

10. Accumulateur selon l'une des revendications précédentes, **caractérisé en ce que** le corps creux en graphite est renforcé au moyen d'un matelas de fibres de carbone pour résister à la pression.

11. Accumulateur selon l'une des revendications précédentes, **caractérisé en ce que** le corps creux en graphite est isolé tour à tour par des couches de feutre dur de graphite, étanches aux gaz, ayant une faible conductivité thermique, et des couches de gaz protecteur, les surfaces en graphite internes étant dotées de réflecteurs de rayons.

12. Accumulateur selon l'une des revendications précédentes, **caractérisé en ce que** l'accumulateur est doté d'une gaine stable, étanche aux gaz, qui présente des dispositifs pour l'absorption d'énergie et la cession d'énergie automatisées.

13. Accumulateur selon l'une des revendications précédentes, **caractérisé en ce que** des énergies de 10 à 50 kWh par litre de milieu de stockage sont stockables en son sein.

14. Accumulateur selon l'une des revendications précédentes, **caractérisé en ce que** les matériaux de stockage, conducteurs de courant, renforçateurs de pression, isolants électriques et isolants thermiques se composent de graphite.

15. Accumulateur selon l'une des revendications précédentes, **caractérisé en ce que** l'énergie thermique est récupérable au moyen d'un générateur à partir de l'accumulateur.

16. Accumulateur selon l'une des revendications précédentes, **caractérisé en ce que** le générateur est un générateur thermoionique ou un moteur sterling.

17. Utilisation d'un accumulateur selon l'une des revendications précédentes, à titre de source d'énergie pour l'entraînement des véhicules terrestres, maritimes, aériens et spatiaux.

18. Utilisation d'un accumulateur selon l'une des revendications précédentes, à titre de bloc stationnaire générateur de courant et de chaleur.

19. Procédé pour le stockage et la récupération de l'énergie dans un accumulateur à haute température selon l'une des revendications précédentes, **caractérisé en ce que** l'énergie thermique est stockée par chauffage du matériau de stockage et récupérée au moyen d'un générateur.

20. Procédé selon la revendication 19, **caractérisé en ce que** le matériau de stockage est chauffé dans l'accumulateur par flux circulant direct et/ou par le biais d'un corps creux en graphite chauffé par le courant.

21. Procédé selon l'une des revendications précédentes 19 ou 20, **caractérisé en ce que** le matériau de stockage après avoir été prélevé de l'accumulateur est chauffé par induction.

22. Procédé selon l'une des revendications précédentes 19 à 21, **caractérisé en ce que** le matériau de stockage est chauffé jusqu'au point de vaporisation en mode de fonctionnement basse pression de l'accumulateur.

23. Procédé selon l'une des revendications précédentes 19 à 22, **caractérisé en ce que** le matériau de stockage est chauffé jusqu'au-dessus du point de vaporisation en mode de fonctionnement haute pression de l'accumulateur.
